# EUROPEAN PATENT SPECIFICATION

(11) **EP 0 300 722 B1**
(45) Date of publication and mention of the grant of the patent: **24.03.1993**
(21) Application number: 88306566.6
(22) Date of filing: 18.07.1988
(51) Int. Cl.: B60H 1/00, G05D 23/19

(54) **Automotive air conditioning system**
Fahrzeugluftklimatisierungsvorrichtung
Système de conditionnement d'air pour véhicule

(30) Priority: 18.07.1987 JP 109593/87 U
(43) Date of publication of application: 25.01.1989
(73) Proprietor: SANDEN CORPORATION, Isesaki-shi Gunma, 372 (JP)
(72) Inventor: Akabane, Hidemitsu, Takasaki-shi Gunma 370 (JP); Isobe, Toshimi, Isesaki-shi Gunma 372 (JP); Hoshino, Seiichi, Nitta-machi Gunma 370-03 (JP)
(74) Representative: Jackson, Peter Arthur

(56) References cited:
- US-A- 4 456 166
- PATENT ABSTRACTS OF JAPAN, vol. 7, no. 9 (M-185)[1154], 14th January 1983; & JP-A-57 167 817 (NIPPON DENSO K.K.) 15-10-1982
- PATENT ABSTRACTS OF JAPAN, vol. 10, no. 307 (M-527)[2363], 18th October 1986; & JP-A-61 119 417 (NIPPON RADIATOR CO., LTD) 06-06-1986
- PATENT ABSTRACTS OF JAPAN, vol. 11, no. 250 (M-616)[2697], 14th August 1987; & JP-A-62 59 115 (NIPPON DENSO CO., LTD) 14-03-1987 (Cat. A)
- PATENT ABSTRACTS OF JAPAN, vol. 172 (M-154)[1050], 7th September 1982; & JP-A-57 84 216 (HITACHI SEISAKUSHO K.K.) 26-05-1980
- PATENT ABSTRACTS OF JAPAN, vol. 7, no. 179 (M-234)[1324], 9th August 1983; & JP-A-58 81 813 (HITACHI SEISAKUSHO K.K.) 17-05-1983

## Description

The present invention relates to an automotive air conditioning system and, more particularly, to an automotive air conditioning system which controls temperature of the air flow out to a compartment in accordance with the angle of an air mix damper driven by a motor actuator.

A conventional automotive air conditioning system which includes an automatic air temperature control function is provided with a control circuit. The control circuit computes a desired open angle of an air mix damper in accordance with a predetermined temperature, an outside air temperature, an inside air temperature, etc., and drives the air mix damper to the desired open angle by a drive device, e.g., a motor actuator, thereby controlling the temperature of the air outflow. The rotatable angle of the motor actuator is restricted by the upper and lower limitations of a regulating portion corresponding to the range of operation of the air mix damper. Additionally, restriction of the rotatable angle of the motor actuator is made in accordance with position signals from a position detecting portion, e.g., a variable resistor, in the motor actuator.

However, a relative position lag between the variable resistor and the upper and lower limitations of the regulating portion cannot be prevented from occurring and the resistance value of resistors is not always certain. In consideration of the above problems, a well-known technique to improve the accuracy of the position when the air conditioning system is turned on is to forcibly operate a motor actuator. The position signal of the motor actuator at the upper and lower limitations of a regulating portion is input to a control circuit. The control circuit controls the position of an air mix damper in accordance with the position signal.

In spite of the above improvement, there may be a difference between the strokes of the air mix damper and the motor actuator since the lengths of the rods and links which connect the air mix damper with the motor actuator are not always certain. Furthermore, if there is an error in connecting the air mix damper and the motor actuator are by the rods or links, the motor actuator may not be driven to the upper or lower limitation of the rotational angle of the motor even though the air mix damper is completely closed or opened. In the above case, the motor may lock, and thereafter the control device which includes a microcomputer cannot control the motor. Additionally, the motor may be destroyed by continuously supplying electricity to the motor for a long time.

JP-A-57/167817 discloses a vehicle air conditioning system in which the motor operating an air mix damper is stopped when the motor reaches its maximum heating and cooling positions.

JP-A-61/119417 discloses another vehicle air conditioning system which allows for correction of the resistance values of a variable resistor which is used in determining the position of the motor.

It is one object of this invention to provide an automotive air conditioning system which can suitably control the temperature of the air flow out to a compartment.

It is another object of this invention to provide an automotive air conditioning system which can prevent destruction of a motor actuator.

According to the present invention, there is provided an automotive air conditioning system comprising an air mix damper controlling the temperature of air outflow; a motor driving the air mix damper; a motor actuator including a rotation control switch which is provided with a regulating portion regulating upper and lower limitations of a rotational angle of the motor and a position detecting portion detecting the rotational angle of the motor; and, a control circuit driving the motor actuator in accordance with a plurality of detected signals, e.g., an inside temperature signal or an outside temperature signal, the control circuit starting operation of position control of the motor actuator after inputting at least one of position signals corresponding to upper and lower limitations of the rotational angle of the motor; a determination means for determining whether the motor has reached the upper or lower limitation of its rotational angle and stopping the motor if it has reached said limitation; characterised by: means for stopping the motor when a predetermined period of time has elapsed after drive of the motor is initiated and the motor has not reached the limitation of its rotational angle; and, a control means for using a signal from the position detecting portion at a position at which the motor has been stopped as the position signal of the regulating portion.

Further objects, features and other aspects of this invention will be understood from the detailed description of the preferred embodiment of this invention.

In the drawings:
Figure 1 is a schematic view of an automotive air conditioning system in accordance with one embodiment of this invention; and,
Figure 2 is a flow chart for describing operation of the system shown in Figure 1.

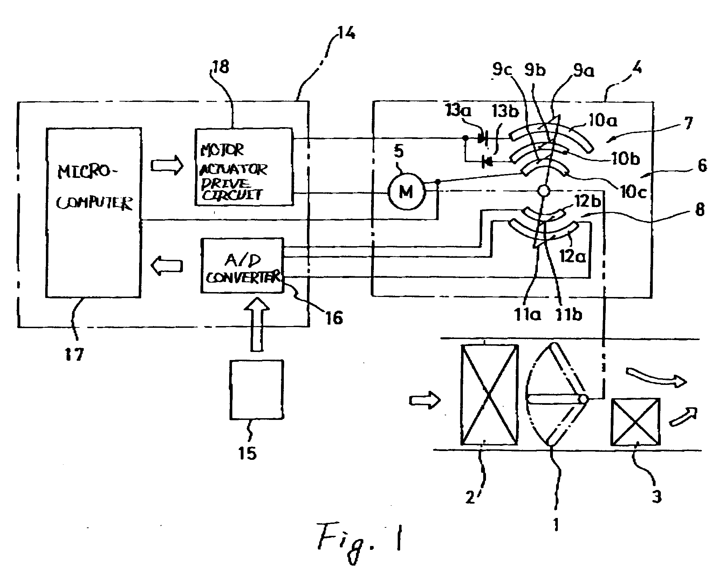

With reference to Figure 1, a schematic view of an air conditioning system which includes an automatic control mechanism is shown.

Air mix damper 1 is disposed downstream of evaporator 2 and controls the volume of the air which flows to heater core 3, whereby the temperature of the air which flows out is controlled. Motor actuator 4 is connected to air mix damper 1 through a wire or link to vary the angle of the air mix damper 1.

Motor actuator 4 comprises motor 5 and rotation control switch 6 to control rotation of motor 5. Rotation control switch 6 includes regulating portion 7 to regulate upper and lower limitations of the rotatable angle of motor 5 and position detecting portion 8 to detect an actual rotational angle of motor 5.

Regulating portion 7 includes movable contact points 9a, 9b and 9c which are rotationally driven in accordance with rotation of motor 5, and fixed contact points 10a, 10b and 10c to contact movable contact points 9a, 9b and 9c. Fixed contact points 10a, 10b and 10c are made in the form of an arc. The upper and lower limitations of the rotatable angle of motor 5 are determined by the connection between fixed contact points 10a and 10b and movable contact points 9a and 9b. Fixed contact points 10a and 10b are coupled with motor actuator control circuit 14 through diodes 13a and 13b each of which has a different polarity. Fixed contact point 10c is coupled with motor actuator control circuit 14 through motor 5.

Position detecting portion 8 comprises movable contact points 11a and 11b, which are rotationally driven in accordance with rotation of the motor 5, and fixed contact points 12a and 12b to contact movable contact points 11a and 11b. Since fixed contact points 12 are formed of a resistive substance, rotation of the motor 5 is detected by the position detecting portion 8 as a variation of resistance value, and the rotational angle of motor 5 is then fed back to motor actuator control circuit 14.

Motor actuator control circuit 14 which includes A/D converter 16, micro-computer 17 and motor actuator drive circuit 18 is a control drive circuit device for automatically controlling air temperature and controls operation of motor actuator 4 in accordance with a prescribed control program. The signals from sensors 15, e.g., an inside temperature sensor, an outside temperature sensor, an evaporator temperature sensor, a thermosensor for water in the heater core 3, an isolation sensor and a temperature predetermined device, and rotation detecting portion 8, are input to micro-computer 17, which includes a control program through A/D converter 16, and then sent to motor actuator 4 through motor actuator drive circuit 18.

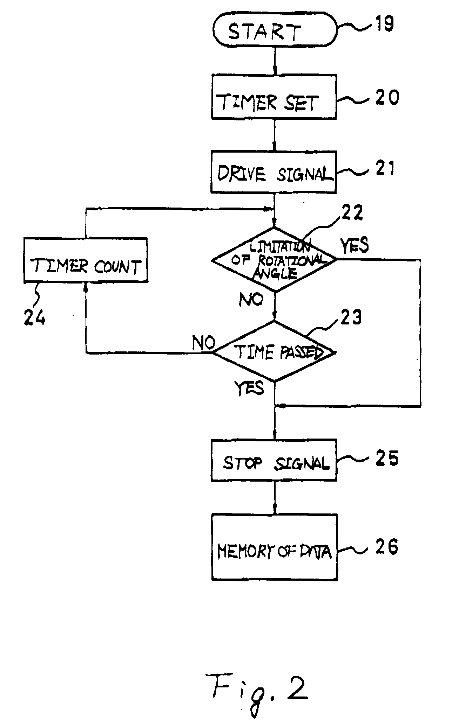

With reference to Figure 2, a flow chart for describing operation of the above construction is shown.

When the air conditioning system is turned on at step 19, a timer is set for a first predetermined time period at step 20. A drive signal is sent to motor actuator control circuit 14 at step 21 and control passes to step 22. In step 22, a determination is made whether or not the rotational angle of motor 5 is positioned at the lower limitation of regulating portion 7. If the rotational angle of motor is positioned at the lower limitation of regulating portion 7, control passes to step 25. In step 25, a stop signal is output to motor actuator circuit 14 and motor actuator 4 is stopped. Control passes to step 26, in which the data from position detecting portion 8 indicating that the rotational angle of motor 5 is positioned at the lower limitation of regulating portion 7 is memorised. In the next control cycle, microcomputer 17 controls the position of motor actuator 4 in accordance with the memorised data for the rotational angle of motor 5 at the lower limitation of regulating portion 7.

In step 22, if it is determined that the rotational angel of motor 5 is not positioned at the lower limitation of regulating portion 7, control passes to step 23. A determination is made in step 23 whether or not a predetermined time period after the drive signal was sent to motor actuator control circuit 14 at step 21 has elapsed. If the predetermined time has not elapsed, control passes to step 24. In step 24, a timer starts to count a second predetermined time and, after the second predetermined time passed, control is returned from step 24 to 22. Otherwise, if it is determined in step 23 that the predetermined time has elapsed, control passes to step 25. In step 25, a stop signal is output to motor actuator control circuit 14 and motor actuator 4 is stopped. Control passes from step 25 to 26, and the data from the position detecting portion is memorised as above at step 26.

In the above-mentioned automotive air conditioning system, even though motor actuator 4 is locked and cannot move until the lower limitation of regulating portion 7 is determined, position control of motor actuator 4 is made by using the position at which motor actuator 4 is locked as the lower limitation of regulating portion 7. Additionally, when motor actuator 4 cannot move, but the lower limitation of regulating portion 7 has not been reached, a drive signal is conventionally continuously output to motor actuator circuit 14, thereby destroying motor 5. This problem is also prevented with the present invention.

Although the above description refers to the data of a position detecting portion at the lower limitation of a motor actuator, the present invention is applicable using the upper limitation or both upper and lower limitations of a motor.

## Claims

1. An automotive air conditioning system comprising an air mix damper (1) controlling the temperature of air outflow; a motor (5) driving the air mix damper; a motor actuator (4) including a rotation control switch (6) which is provided with a regulating portion (7) regulating upper and lower limitations of a rotational angle of the motor (5) and a position detecting portion (8) detecting the rotational angle of the motor; and, a control circuit (14) driving the motor actuator in accordance with a plurality of detected signals, e.g., an inside temperature signal or an outside temperature signal, the control circuit starting operation of position control of the motor actuator after inputting at least one of position signals corresponding to upper and lower limitations of the rotational angle of the motor; a determination means (17) for determining whether the motor has reached the upper or lower limitation of its rotational angle and stopping the motor if it has reached said limitation; characterised by:
means (17) for stopping the motor when a predetermined period of time has elapsed after drive of the motor is initiated and the motor has not reached the limitation of its rotational angle; and,
a control means (17) for using a signal from the position detecting portion (8) at a position at which the motor has been stopped as the position signal of the regulating portion (7).

## Patentansprüche

1. Fahrzeugklimaanlage mit einer die Temperatur eines Luftausflusses steuernden Luftmischlüftungsklappe (1); einem die Luftmischlüftungsklappe antreibenden Motor (5); einem Motorbetätigungsorgan (4) einschließlich eines Rotationssteuerschalters (6), der mit einem die obere und untere Begrenzung des Drehwinkels des Motors (5) steuernden Regulierabschnitt (7) und einem den Rotationswinkel des Motors erfassenden Positionserfassungsabschnitt (8); und einer Steuerschaltung (14), die das Motorbetätigungsorgan gemäß einer Mehrzahl von erfaßten Signalen treibt, z.B. einem Innentemperatursignal oder einem Außentemperatursignal, wobei die Steuerschaltung den Betrieb der Positionssteuerung des Motorbetätigungsorganes startet nach Eingabe von mindestem von Positionssignalen, die der oberen und unteren Begrenzung des Drehwinkels des Motors entsprechen; einem Bestimmungsmittel (17) zum Bestimmen, ob der Motor die obere oder untere Begrenzung seines Drehwinkels erreicht hat, und Stoppen des Motors, wenn er die Begrenzung erreicht hat; gekennzeichnet durch:
Mittel (17) zum Stoppen des Motors, wenn eine vorbestimmte Zeitdauer abgelaufen ist, nachdem der Antrieb des Motors begonnen hat und der Motor die Begrenzung seines Rotationswinkels nicht erreicht hat; und
eine Steuermittel (17) zum Benutzen eines Signales von dem Positionserfassungsabschnitt (8) an einer Position, an der Motor angehalten worden ist, als Positionssignal des Regulierabschnittes (7).

## Revendications

1. Système de conditionnement d'air pour véhicule comprenant un papillon de mélange d'air (1) commandant la température d'un débit d'air de sortie ; un moteur (5) entraînant le papillon de mélange d'air ; un organe de manoeuvre à moteur (4) comprenant un commutateur de commande de rotation (6) muni d'une partie de régulation (7) commandant la borne supérieure et la borne inférieure d'un angle de rotation du moteur (5), et une partie de détection de position (8) détectant l'angle de rotation du moteur ; et un circuit de commande (14) entraînant l'organe de manoeuvre à moteur suivant un certain nombre de signaux détectés tels que par exemple un signal de température intérieure ou un signal de température extérieure, le circuit de commande déclenchant le fonctionnement de la commande de position de l'organe de manoeuvre à moteur après l'introduction d'au moins l'un des signaux de position correspondant à la borne supérieure ou à la borne inférieure de l'angle de rotation du moteur ; des moyens de détermination (17) destinés à déterminer si le moteur atteint la borne supérieure ou la borne inférieure de son angle de rotation, et à stopper le moteur si celui-ci n'a pas atteint cette borne ; système caractérisé en ce qu il comprend :
des moyens (17) destinés à stopper le moteur lorsqu'une période de temps prédéterminée s'est écoulée après que l'entraînement du moteur ait été déclenché tandis que le moteur n'a pas atteint la borne de son angle de rotation ; et
des moyens de commande (17) destinés à utiliser un signal provenant de la partie de détection de position (8) dans une position pour laquelle le moteur a été stoppé, comme signal de position de la partie de régulation (7).
